# EUROPÄISCHE PATENTANMELDUNG

(11) **EP 4 209 298 A1**
(43) Veröffentlichungstag der Anmeldung: **12.07.2023**
(21) Anmeldenummer: 23154487.5
(22) Anmeldetag: 11.09.2019
(51) Int. Cl.: B23C 5/22, B23C 5/08

(54) **SCHNEIDWERKZEUG MIT EINER ANORDNUNG ZUMINDEST EINES SCHNEIDKÖRPERS**

(30) Priorität: 11.09.2018 DE 102018215413
(62) Teilanmeldung aus: 19196700.9
(71) Anmelder: Avantec Zerspantechnik GmbH, 75428 Illingen (DE)
(72) Erfinder: Abel, Pierre, 75428 Illingen (DE); Werthwein, Gustav, 75428 Illingen (DE); Werthwein, Uli, 75428 Illingen (DE)
(74) Vertreter: Grauel, Andreas

(57) **Zusammenfassung**

Die Erfindung betrifft ein Schneidwerkzeug (1, 101) mit einer Anordnung zumindest eines Schneidkörpers (3, 103), mit einem Grundkörper (2, 102) mit zumindest einer ersten Ausnehmung (5, 105) zur Aufnahme des Schneidkörpers (3, 103) und mit einer zweiten Ausnehmung (6, 106) zur Aufnahme eines Spannmittels (7, 107), mittels welchem der Schneidkörper (3, 103) gegen den Grundkörper (2, 102) beaufschlagbar und/oder formschlüssig in dem Grundkörper (2, 102) sicherbar ist, wobei die erste Ausnehmung (5, 105) gegenüberliegende erste Führungsbereiche (14, 114) und zweite Führungsbereiche (15, 115) aufweist, die mit dritten Führungsbereichen (16, 116) und vierten Führungsbereichen (17, 117) des Schneidkörpers (3, 103) kooperieren, wobei das Spannmittel (7, 107) einen fünften Führungsbereich (18, 118) aufweist, welcher mit einem sechsten Führungsbereich (19, 119) des Schneidkörpers (3, 103) zusammenwirkt, wobei die erste Ausnehmung (5, 105) und die zweite Ausnehmung (6, 106) derart benachbart zueinander angeordnet sind, dass das Spannmittel (7, 107) benachbart zu der ersten Ausnehmung (5, 105) angeordnet ist, so dass der fünfte Führungsbereich (18, 118) des Spannmittels (7, 107) benachbart zu dem ersten Führungsbereich (14, 114) der ersten Ausnehmung (5, 105) angeordnet ist und der dritte Führungsbereich (16, 116) des Schneidkörpers (3, 103) in den ersten Führungsbereich (14, 114) eingreift und der fünfte Führungsbereich (18, 118) des Spannmittels (7, 107) in den sechsten Führungsbereich (19, 119) eingreift.

## Beschreibung

### Technisches Gebiet

Die Erfindung betrifft ein Schneidwerkzeug mit einer Anordnung zumindest eines Schneidkörpers.

### Technischer Hintergrund der Erfindung

Schneidwerkzeuge mit einer Anordnung eines Schneidkörpers und insbesondere auch mit einer Anordnung einer Vielzahl von Schneidkörpern sind im Stand der Technik bekannt.

Es ist beispielsweise eine Trennscheibe bekannt, die einen im Wesentlichen kreisförmigen scheibenförmigen Grundkörper aufweist, der radial außen über den Umfang verteilte Ausnehmungen aufweist, wobei der Grundkörper auf einer Seite der jeweiligen Ausnehmung eine Anlagefläche für den einzusetzenden Schneidkörper aufweist und auf der anderen Seite der Ausnehmung elastische Zungen aufweist, so dass beim Einsetzen des jeweiligen Schneidkörpers die jeweilige Zunge elastisch verformt wird und den Schneidkörper gegen die jeweilige Anlagefläche beaufschlagt. Damit wird eine kraftschlüssige Verbindung zwischen dem Grundkörper und dem Schneidkörper erzeugt. Diese kraftschlüssige Verbindung ist zwar schnell und kostengünstig zu erzeugen, sie ist jedoch in Bezug auf die wirkenden Kräfte beschränkt und erlaubt nur geringe Drehzahlen und damit auch nur geringe Bearbeitungsgeschwindigkeiten,

### Darstellung der Erfindung, Aufgabe, Lösung, Vorteile

Es ist die Aufgabe der Erfindung, ein Schneidwerkzeug mit einer Anordnung zumindest eines Schneidkörpers zu schaffen, das gegenüber dem Stand der Technik verbessert ist und insbesondere eine höhere Bearbeitungsgeschwindigkeit erlaubt.

Die Aufgabe wird mit den Merkmalen von Anspruch 1 gelöst.

Ein Ausführungsbeispiel der Erfindung betrifft ein Schneidwerkzeug mit einer Anordnung zumindest eines Schneidkörpers, mit einem Grundkörper mit zumindest einer ersten Ausnehmung zur Aufnahme des Schneidkörpers und mit einer zweiten Ausnehmung zur Aufnahme eines Spannmittels, mittels welchem der Schneidkörper gegen den Grundkörper beaufschlagbar und/oder formschlüssig in dem Grundkörper sicherbar ist, wobei die erste Ausnehmung gegenüberliegende erste Führungsbereiche und zweite Führungsbereiche aufweist, die mit dritten Führungsbereichen und vierten Führungsbereichen des Schneidkörpers kooperieren, wobei das Spannmittel einen fünften Führungsbereich aufweist, welcher mit einem sechsten Führungsbereich des Schneidkörpers zusammenwirkt, wobei die erste Ausnehmung und die zweite Ausnehmung derart benachbart zueinander angeordnet sind, dass das Spannmittel benachbart zu der ersten Ausnehmung angeordnet ist, so dass der fünfte Führungsbereich des Spannmittels benachbart zu dem ersten Führungsbereich der ersten Ausnehmung angeordnet ist und der dritte Führungsbereich des Schneidkörpers in den ersten Führungsbereich eingreift und der fünfte Führungsbereich des Spannmittels in den sechsten Führungsbereich eingreift. Dadurch wird es möglich, den Schneidkörper sicher in der ersten Ausnehmung anzuordnen, so dass eine Bearbeitung eines Werkstücks mit einer höheren Bearbeitungsgeschwindigkeit ermöglicht wird.

Vorteilhaft ist es, wenn die zweite Ausnehmung eine Bohrung ist und das Spannmittel eine Spannpuppe mit sich vergrößerndem Radius als Funktion des Umfangswinkels ist, welches in die Bohrung einsetzbar und darin verdrehbar ist. Dabei wird durch ein Verdrehen der Spannpuppe eine Beaufschlagung des Schneidkörpers bewirkt, weil der Radius der Spannpuppe im Bereich der Berührung von Spannpuppe und Schneidkörper bei der Drehung steigt. Vorteilhaft kann die Spannpuppe auch einen Segmentabschnitt aufweisen, was ein verbessertes Einsetzen der Spannpuppe in die Bohrung erlaubt.

Vorteilhaft ist es auch, wenn die zweite Ausnehmung in Längsrichtung der ersten Ausnehmung betrachtet etwa mittig der Länge der ersten Ausnehmung und benachbart zu der ersten Ausnehmung angeordnet ist. Damit wird eine sichere Anordnung und Anpressung des Schneidkörpers erreicht, weil eine etwa mittige Beaufschlagung erfolgt.

Vorteilhaft ist es, wenn der erste Führungsbereich und der zweite Führungsbereich als bogenförmige Führungsnuten ausgebildet sind. Damit wird eine einfache Zentrierung des Schneidkörpers in der ersten Ausnehmung erreicht.

Vorteilhaft ist es auch, wenn der dritte Führungsbereich und der vierte Führungsbereich als bogenförmige Führungsvorsprünge ausgebildet sind. Dabei ist die jeweilige bogenförmige Kontur der Führungsvorsprünge angepasst an die jeweilige bogenförmige Kontur der Führungsnuten. Dadurch wird eine sichere Anordnung erreicht.

Auch ist es vorteilhaft, wenn der erste Führungsbereich und der zweite Führungsbereich als abgewinkelte, v-förmige Führungsnuten, insbesondere mit einem abgeflachten mittigen Grund, ausgebildet sind.

Weiterhin ist es vorteilhaft, wenn der dritte Führungsbereich und der vierte Führungsbereich als abgewinkelte, v-förmige Führungsvorsprünge, insbesondere mit einem abgeflachten Spitzenbereich, ausgebildet sind.

Vorteilhaft ist es ebenso, wenn der fünfte Führungsbereich als bogenförmige Kontur des Spannmittels ausgebildet ist und der sechste Führungsbereich als bogenförmige Vertiefung des Schneidkörpers ausgebildet ist. Dabei sind die jeweiligen Konturen derart kompatibel, dass ein Eingreifen des fünften Führungsbereichs als Beaufschlagungsfläche in den sechsten Führungsbereich gut möglich ist und bei Verdrehung der Spannpuppe eine Verspannung bewirkt wird.

Vorteilhaft ist es auch, wenn der dritte und der vierte Führungsbereich eine Längsachse aufweist, die parallel zur Längserstreckung des Schneidkörpers ausgerichtet ist. Damit wird ein einfaches Einführen parallel zur Längsachse des Schneidkörpers erreicht.

Ebenso ist es zweckmäßig, wenn der erste und der zweite Führungsbereich eine Längsachse aufweist, die parallel zur Längserstreckung der ersten Ausnehmung ausgerichtet ist. Damit wird ein einfaches Einführen parallel zur Längsachse der ersten Ausnehmung erreicht.

Vorteilhaft ist es auch, wenn der fünfte Führungsbereich eine Längsachse aufweist, die senkrecht zur Längserstreckung der ersten Ausnehmung ausgerichtet ist und dass der sechste Führungsbereich eine Längsachse aufweist, die senkrecht zur Längserstreckung des Schneidkörpers ausgerichtet ist. Damit wird ein Blockieren des Schneidkörpers in der ersten Ausnehmung ermöglicht.

Auch ist es vorteilhaft, wenn der Grundkörper eine drehbar anordenbare Scheibe ist mit einer Mehrzahl von über den Umfang verteilten radial außen angeordneten Schneidkörpern. Damit kann beispielsweise eine Frässcheibe bzw. ein Fräskopf zum Fräsen bzw. Schneiden von Material bzw. Werkstücken erzeugt werden.

Auch ist es vorteilhaft, wenn der Grundkörper ein feststellbarer Halter ist mit zumindest einem feststehend anordenbaren Schneidkörper. Solche Halter können beispielsweise bei Drehmaschinen etc. eingesetzt werden, bei welchen der Schneidkörper steht und das zu bearbeitende Werkstück sich bewegt, wie beispielsweise dreht.

Vorteilhaft ist es auch, wenn der jeweilige Schneidkörper mittels des jeweiligen Spannmittels lateral bzw. in Umfangsrichtung gegen den Grundkörper verspannbar ist. Damit wird eine sichere Halterung des Schneidkörpers an dem Grundkörper erreicht.

Weitere vorteilhafte Ausgestaltungen sind durch die nachfolgende Figurenbeschreibung und durch die Unteransprüche beschrieben.

### Kurze Beschreibung der Figuren der Zeichnung

Nachstehend wird die Erfindung auf der Grundlage mehrerer Ausführungsbeispiele anhand der Figuren der Zeichnungen näher erläutert. Es zeigen:
- Fig. 1: eine schematische Ansicht eines erfindungsgemäßen Schneidwerkzeugs,
- Fig. 2: eine Darstellung des erfindungsgemäßen Schneidwerkzeugs von der Seite,
- Fig. 3: ein vergrößertes Detail des Schneidwerkzeugs nach Figur 2,
- Fig. 4: eine Schnittdarstellung gemäß Linie A-A der Figur 2,
- Fig. 5: eine Schnittdarstellung des Spannmittels,
- Fig. 6: eine Seitenansicht des Spannmittels,
- Fig. 7: eine perspektivische Darstellung eines Schneidkörpers,
- Fig. 8: ein Horizontalschnitt des Schneidkörpers,
- Fig. 9: eine Seitenansicht des Schneidkörpers,
- Fig. 10: eine weitere Seitenansicht des Schneidkörpers,
- Fig. 11: eine schematische Ansicht eines weiteren erfindungsgemäßen Schneidwerkzeugs,
- Fig. 12: eine Seitenansicht des erfindungsgemäßen Schneidwerkzeugs gemäß Figur 11,
- Fig. 13: ein vergrößertes Detail des Schneidwerkzeugs nach Figur 11,
- Fig. 14: eine Schnittdarstellung gemäß Linie A-A der Figur 11,
- Fig. 15: eine weitere Seitenansicht des Schneidkörpers,
- Fig. 16: ein Horizontalschnitt des Schneidkörpers,
- Fig. 17: eine Seitenansicht des Schneidkörpers,
- Fig. 18: eine perspektivische Darstellung des Spannmittels,
- Fig. 19: eine Schnittdarstellung des Spannmittels, und
- Fig. 20: eine Seitenansicht des Spannmittels.

### Bevorzugte Ausführung der Erfindung

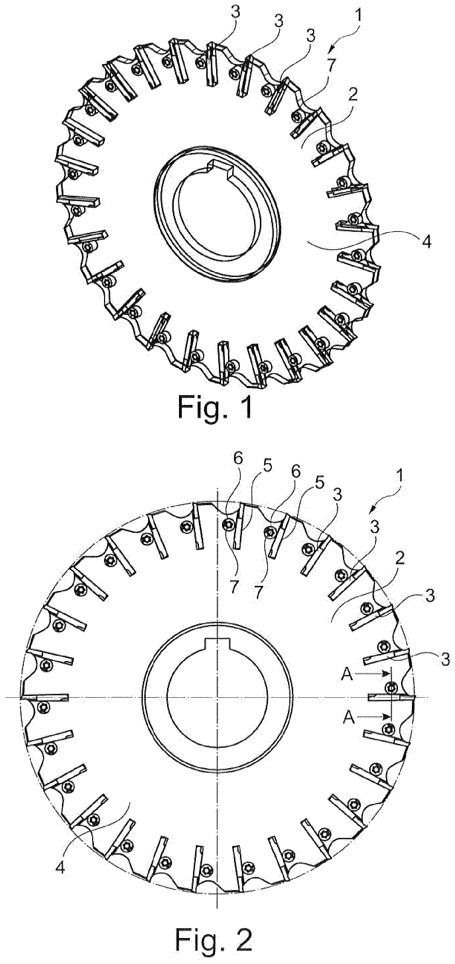

Die Figuren 1 bis 10 zeigen in verschiedenen Ansichten Details eines ersten erfindungsgemäßen Schneidwerkzeugs 1. Die Figuren 1 und 2 zeigen das Schneidwerkzeug 1 in einem ersten Ausführungsbeispiel.

Das erfindungsgemäße Schneidwerkzeug 1 weist grundsätzlich einen Grundkörper 2 und daran angeordnet zumindest einen Schneidkörper 3 auf. Dabei ist eine Vielzahl an Schneidkörpern 3 gezeigt, es können aber auch mehr oder weniger Schneidkpörper 3 vorgesehen sein.

Gemäß dem Ausführungsbeispiel der Figuren 1, 2 und 3 ist das erfindungsgemäße Schneidwerkzeug 1 mit einem Grundkörper 2 ausgebildet, der als eine drehbar anordenbare und antreibbare Scheibe 4 ausgebildet ist, wobei an der Scheibe 4 radial außen eine Mehrzahl von über den Umfang verteilt angeordneten Schneidkörpern 3 vorgesehen ist. In dem gezeigten Ausführungsbeispiel sind sechsundzwanzig Schneidkörper 3 an der Scheibe 4 vorgesehen. Alternativ kann die Anzahl der Schneidkörper 3 an dem Grundkörper 2 auch unterschiedlich sein. Es können auch mehr solcher Schneidkörper 3 vorgesehen sein oder es können auch weniger solcher Schneidkörper 3 vorgesehen sein.

Bei einer nicht dargestellten alternativen Gestaltung kann der Grundkörper 2 auch als ein feststellbarer Halter ausgebildet sein, an welchem zumindest ein feststehend anordenbarer Schneidkörper 3 vorgesehen sein kann. Solch ein Halter mit zumindest einem Schneidkörper 3 eignet sich bevorzugt für eine Drehmaschine etc.

Das erfindungsgemäße Schneidwerkzeug 1 sieht also eine Anordnung zumindest eines Schneidkörpers 3, vorteilhaft eine Mehrzahl von Schneidkörpern 3 vor. Mittels des Schneidkörpers 3 mit zumindest einer Hauptschneide und optional auch mit zumindest einer oder zwei Nebenschneiden wird ein Werkstück bearbeitet, das in den Figuren jedoch nicht gezeigt ist.

Die Schneidkörper 3 sind an dem Grundkörper 2 des Schneidwerkzeugs 1 angeordnet. Dazu weist der Grundkörper 2 zumindest eine erste Ausnehmung 5 auf zur Aufnahme des Schneidkörpers 3. Die Ausnehmung 5 ist nach radial außen hin offen, so dass der Schneidkörper 3 von radial außen in die Ausnehmung 5 eingeschoben werden kann.

Der Grundkörper 2 weist eine zweite Ausnehmung 6 auf zur Aufnahme eines Spannmittels 7. Das Spannmittel 7 dient dazu, dass der Schneidkörper 3 gegen den Grundkörper 2 beaufschlagbar ist, um den Schneidkörper 3 an dem Grundkörper 2 in seiner Lage zu halten und zu befestigen. Dabei ist bevorzugt jedem Schneidkörper 3 eine erste Ausnehmung 5 zugeordnet, in welche der Schneidkörper 3 eingesetzt wird und es ist jedem Schneidkörper 3 ein Spannmittel 7 zugeordnet, welchem wiederum eine zweite Ausnehmung 6 zugeordnet ist.

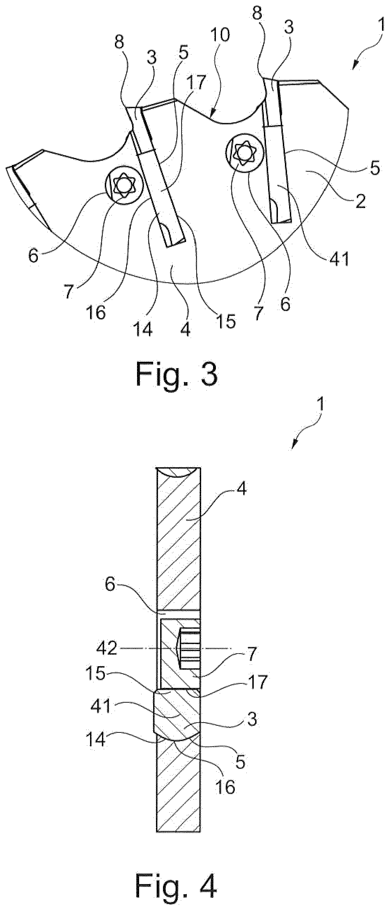

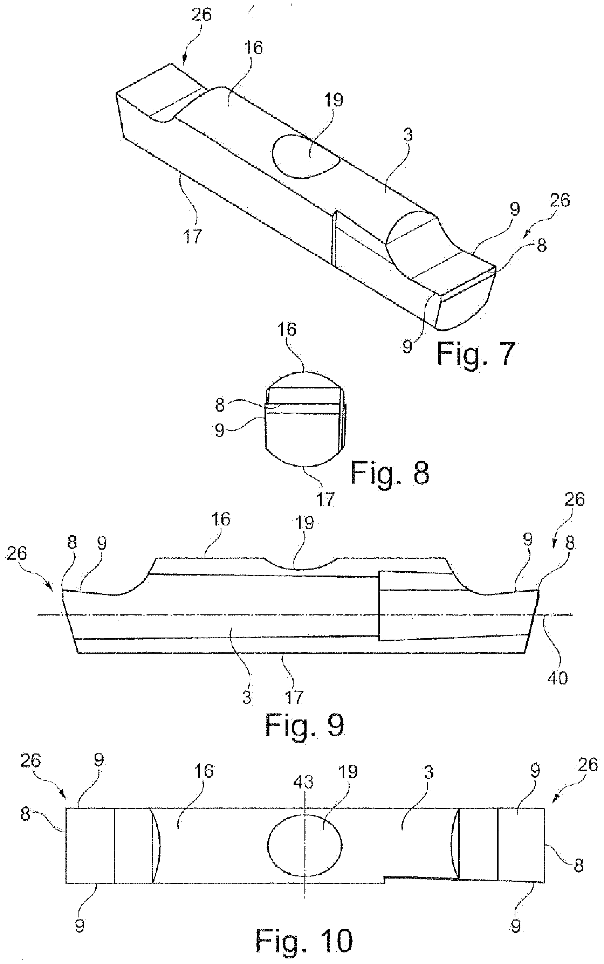

Die Hauptschneide 8 und die optional auch die Nebenschneide 3 bzw. die Nebenschneiden 9 ragen radial außen und gegebenenfalls axial über den Grundkörper 2 hinaus, wie dies in Figur 3 oder in den Figuren 7 bis 10 zu erkennen ist.

In Drehrichtung vor der jeweiligen Hauptschneide 8 weist der Grundkörper 2 jeweils eine insbesondere bogenförmige Vertiefung 10 auf, die als Spankammer dient.

Die Figur 4 zeigt die Anordnung des Schneidkörpers 3 in der ersten Ausnehmung 5 und des Spannmittels 7 in der zweiten Ausnehmung 6 im Schnitt gemäß der Linie A-A der Figur 2. Man erkennt den Grundkörper 2, den Schneidkörper 3 und das Spannmittel 7, wobei der Schneidkörper 3 in der ersten Ausnehmung 5 und das Spannmittel 7 in der zweiten Ausnehmung 6 angeordnet ist.

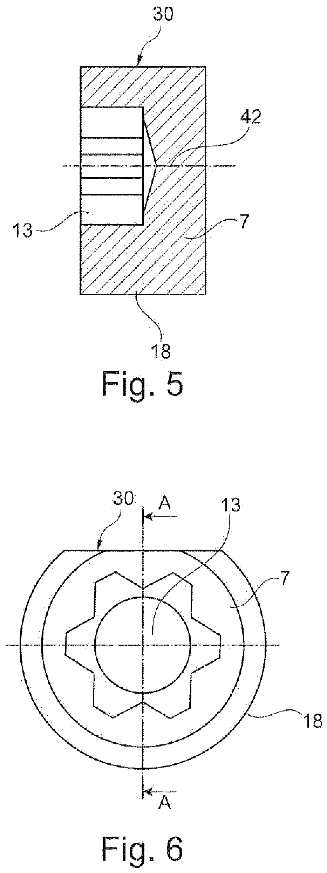

Die zweite Ausnehmung 6 ist als eine Bohrung ausgebildet, wobei das Spannmittel 7 eine etwa runde Spannpuppe mit einem Segmentabschnitt ist, siehe Figuren 5 und 6, welches in die Bohrung einsetzbar ist. Dabei ist der Radius der Spanpuppe über den Umfang nicht gleich, sondern nimmt in Umfangsrichtung zu, so dass bei einer Verdrehung der Spannpuppe ein größer werdender Radius sich gegen den Spannkörper abstützt und so eine Verspannung bewirkt werden kann. Entsprechend wird das Spannmittel 7 in axialer Richtung in die zweite Ausnehmung 6, wie die Bohrung, eingesetzt. Zum Einsetzen und Verdrehen weist das Spannmittel 7 einen Werkzeugangriffsbereich 13 auf, der beispielsweise als Torx, TorxPlus, Imbus etc. ausgebildet sein kann.

Die erste Ausnehmung 5 in dem Grundkörper 2 weist gegenüberliegende erste Führungsbereiche 14 und zweite Führungsbereiche 15 auf, die mit dritten Führungsbereichen 16 und vierten Führungsbereichen 17 des Schneidkörpers 3 kooperieren. Auch das Spannmittel 7 weist einen fünften Führungsbereich 18 auf, welcher ebenso mit dem sechsten Führungsbereich 19 des Schneidkörpers 3 kooperiert.

Gemäß der Figuren 1 bis 4 sind die erste Ausnehmung 5 und die zweite Ausnehmung 6 derart benachbart zueinander angeordnet, dass das Spannmittel 7 benachbart zu der ersten Ausnehmung 5 angeordnet ist, so dass der fünfte Führungsbereich 18 des Spannmittels 7 benachbart zu dem ersten Führungsbereich 14 der ersten Ausnehmung 5 angeordnet ist und der dritte Führungsbereich 16 des Schneidkörpers 3 in den ersten Führungsbereich 14 eingreift, wobei der fünfte Führungsbereich 18 des Spannmittels 7 in den sechsten Führungsbereich 19 des Schneidkörpers 3 eingreift.

Der Schneidkörper 3 greift daher mit seinem dritten und vierten Führungsbereich 16, 17 in den ersten und den zweiten Führungsbereich 14, 15 ein, wobei zum Verspannen der fünfte Führungsbereich 18 den sechsten Führungsbereich 19 beaufschlagt.

Durch ein Verdrehen des Spannmittels 7 und die Vergrößerung des Radius des Spannmittels 7 wird der Schneidkörper 3 in Umfangsrichtung gegen den Grundkörper 2 verspannt.

Die Figur 3 zeigt, dass die zweite Ausnehmung 6 in Längsrichtung der ersten Ausnehmung 5 betrachtet etwa mittig der Länge der ersten Ausnehmung 5 und benachbart zu der ersten Ausnehmung 5 angeordnet ist. Damit wird eine gleichmäßige Kraftverteilung auf den Schneidkörper 3 zum Spannen des Schneidkörpers 3 in der ersten Ausnehmung 5 ermöglicht.

Die Figur 4 zeigt, dass der erste Führungsbereich 14 und der zweite Führungsbereich 15 als bogenförmige Führungsnuten ausgebildet sind. Dabei ist der erste Führungsbereich 14 als bogenförmige erste Führungsnut ausgebildet und es ist der zweite Führungsbereich 15 als bogenförmige zweite Führungsnut ausgebildet.

Die Figuren 4 und 7 bis 10 zeigen auch, dass der dritte Führungsbereich 16 und der vierte Führungsbereich 17 als bogenförmige Führungsvorsprünge ausgebildet sind. Dabei ist der dritte Führungsbereich 16 als bogenförmiger dritter Führungsvorsprung ausgebildet und der vierte Führungsbereich 17 als bogenförmiger vierter Führungsvorsprung ausgebildet.

Dabei ist die jeweilige bogenförmige Kontur des jeweiligen Führungsvorsprungs kompatibel zum der jeweiligen bogenförmigen Kontur der jeweiligen Führungsnut, in welche er eingreift.

In den Figuren ist auch zu erkennen, dass der fünfte Führungsbereich 18 als bogenförmiger Führungsvorsprung ausgebildet ist. Dieser greift in die bogenförmige sechste Führungsnut 19 des Schneidkörpers 3 ein.

Der Schneidkörper 3 gemäß der Figuren 7 bis 10 weist an beiden Endbereichen 26 eine Hauptschneide 8 und optionale Nebenschneiden 9 auf. Der Schneidkörper 3 ist als Wechselschneidkörper ausgebildet. Dabei kann es auch vorteilhaft sein, wenn der Schneidkörper 3 nur in einem Endbereich 26 mit einer Hauptschneide 8 und optionalen Nebenschneiden 9 ausgebildet ist.

Wird das Spannmittel 7 in die zweite Ausnehmung 6 eingesetzt und verdreht, so dass der Segmentabschnitt 30 mit der ersten Ausnehmung 5 fluchtet, so kann der Schneidkörper 3 in die erste Ausnehmung 5 eingesteckt werden. Anschließend kann das Spannmittel 7 verdreht werden, was zum Verspannen des Schneidkörpers 3 in Umfangsrichtung gegen den Grundkörper 2 führt.

Der fünfte Führungsbereich 18 des Spannmittels 7 ist als bogenförmige Kontur des Spannmittels 7 ausgebildet, wobei der sechste Führungsbereich 19 als bogenförmige Vertiefung des Schneidkörpers 3 ausgebildet ist. Entsprechend sind die Konturen kompatibel gewählt.

In den Figuren ist auch zu erkennen, dass der dritte und der vierte Führungsbereich 16, 17 eine Längsachse 40 aufweist, die parallel zur Längserstreckung des Schneidkörpers 3 ausgerichtet ist.

Entsprechend weist der erste und der zweite Führungsbereich 14, 15 eine Längsachse 41 auf, die parallel zur Längserstreckung der ersten Ausnehmung 5 ausgerichtet ist.

Auch weist der fünfte Führungsbereich 18 eine Längsachse 42 auf, die senkrecht zur Längserstreckung der ersten Ausnehmung 5 ausgerichtet ist. Der sechste Führungsbereich 19 weist eine Längsachse 43 auf, die senkrecht zur Längserstreckung des Schneidkörpers 3 ausgerichtet ist.

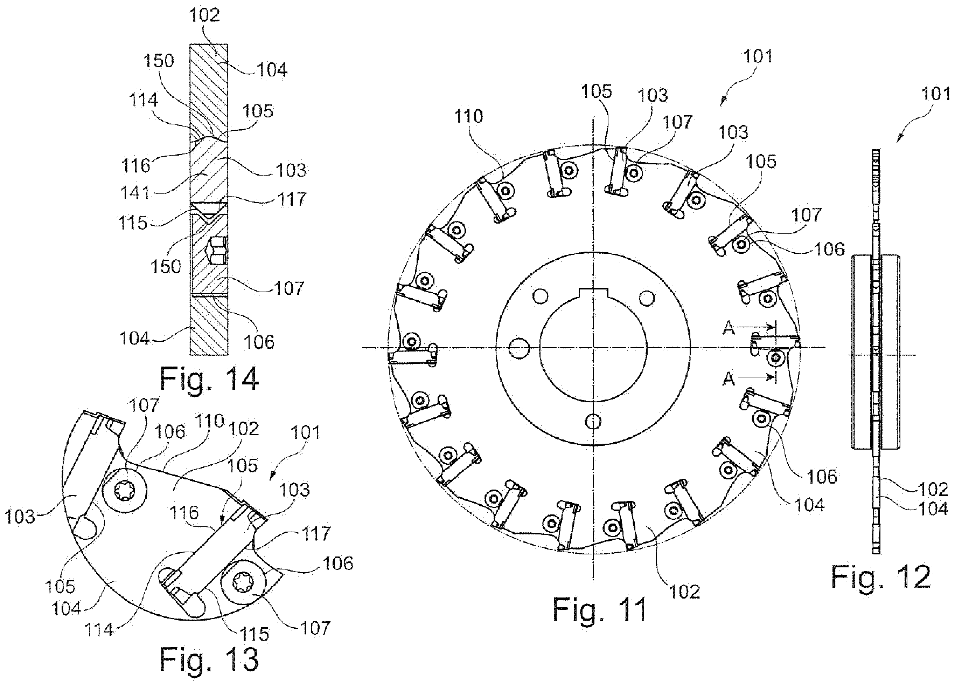

Die Figuren 11 bis 20 zeigen in verschiedenen Ansichten Details eines zweiten erfindungsgemäßen Schneidwerkzeugs 101.

Das erfindungsgemäße Schneidwerkzeug 101 weist grundsätzlich einen Grundkörper 102 und daran angeordnet zumindest einen Schneidkörper 103 auf. Dabei ist eine Vielzahl an Schneidkörpern 103 gezeigt, es können aber auch mehr oder weniger Schneidkörper 103 vorgesehen sein.

Gemäß dem Ausführungsbeispiel der Figuren 11, 12 und 13 ist das erfindungsgemäße Schneidwerkzeug 101 mit einem Grundkörper 102 ausgebildet, der als eine drehbar anordenbare und antreibbare Scheibe 104 ausgebildet ist, wobei an der Scheibe 104 radial außen eine Mehrzahl von über den Umfang verteilt angeordneten Schneidkörpern 103 vorgesehen ist. In dem gezeigten Ausführungsbeispiel sind achtzehn Schneidkörper 103 an der Scheibe 104 vorgesehen. Alternativ kann die Anzahl der Schneidkörper 103 an dem Grundkörper 102 auch unterschiedlich sein. Es können auch mehr solcher Schneidkörper 103 vorgesehen sein oder es können auch weniger solcher Schneidkörper 103 vorgesehen sein.

Bei einer nicht dargestellten alternativen Gestaltung kann der Grundkörper 102 auch als ein feststellbarer Halter ausgebildet sein, an welchem zumindest ein feststehend anordenbarer Schneidkörper 103 vorgesehen sein kann. Solch ein Halter mit zumindest einem Schneidkörper 103 eignet sich bevorzugt für eine Drehmaschine etc.

Das erfindungsgemäße Schneidwerkzeug 101 sieht also eine Anordnung zumindest eines Schneidkörpers 103, vorteilhaft eine Mehrzahl von Schneidkörpern 103 vor. Mittels des Schneidkörpers 103 mit zumindest einer Hauptschneide und optional auch mit zumindest einer oder zwei Nebenschneiden wird ein Werkstück bearbeitet, das in den Figuren jedoch nicht gezeigt ist.

Die Schneidkörper 103 sind an dem Grundkörper 102 des Schneidwerkzeugs 101 angeordnet. Dazu weist der Grundkörper 102 zumindest eine erste Ausnehmung 105 auf zur Aufnahme des Schneidkörpers 103. Die erste Ausnehmung 105 ist nach radial außen hin offen, so dass der Schneidkörper 103 von radial außen in die erste Ausnehmung 105 eingeschoben werden kann.

Der Grundkörper 102 weist eine zweite Ausnehmung 106 auf zur Aufnahme eines Spannmittels 107. Das Spannmittel 107 dient dazu, dass der Schneidkörper 103 gegen den Grundkörper 102 beaufschlagbar ist, um den Schneidkörper 103 an dem Grundkörper 102 in seiner Lage zu halten und zu befestigen. Dabei ist bevorzugt jedem Schneidkörper 103 eine erste Ausnehmung 105 zugeordnet, in welche der Schneidkörper 103 eingesetzt wird und es ist jedem Schneidkörper 103 ein Spannmittel 107 zugeordnet, welchem wiederum eine zweite Ausnehmung 106 zugeordnet ist.

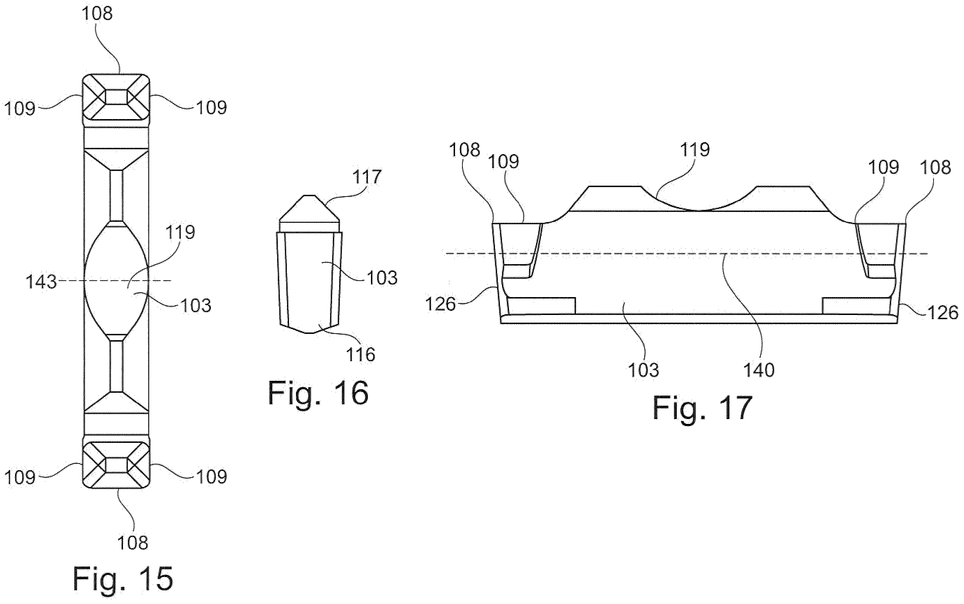

Die Hauptschneide 108 und die optional auch die Nebenschneide 109 bzw. die Nebenschneiden 109 ragen radial außen und gegebenenfalls axial über den Grundkörper 102 hinaus, wie dies in Figur 13 oder in den Figuren 15 bis 17 zu erkennen ist.

In Drehrichtung vor der jeweiligen Hauptschneide 108 weist der Grundkörper 102 jeweils eine insbesondere bogenförmige Vertiefung 110 auf, die als Spankammer dient.

Die Figur 14 zeigt die Anordnung des Schneidkörpers 103 in der ersten Ausnehmung 105 und des Spannmittels 107 in der zweiten Ausnehmung 106 im Schnitt gemäß der Linie A-A der Figur 11. Man erkennt den Grundkörper 102, den Schneidkörper 103 und das Spannmittel 107, wobei der Schneidkörper 103 in der ersten Ausnehmung 105 und das Spannmittel 107 in der zweiten Ausnehmung 106 angeordnet ist.

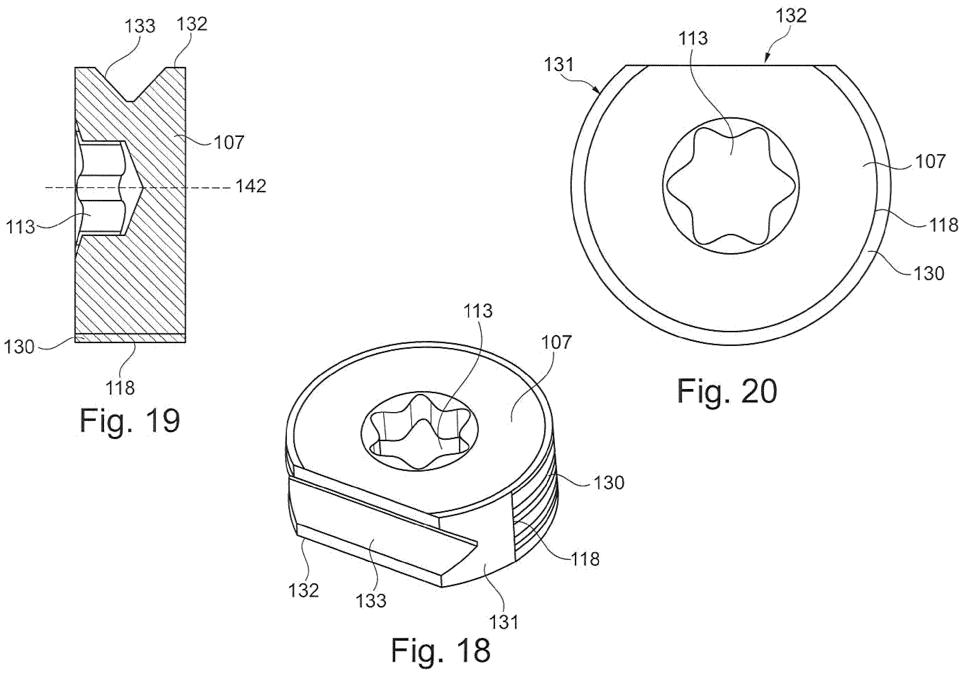

Die zweite Ausnehmung 106 ist als eine Bohrung mit Gewinde ausgebildet, wobei das Spannmittel 107 eine etwa runde Spannpuppe mit einem Segmentabschnitt ist, siehe Figuren 18 bis 20, welches in die Bohrung einschraubbar ist. Dabei ist der Radius der Spannpuppe über den Umfang nicht gleich, sondern weist im Bereich des Gewindes 130 einen konstanten Radius auf und weist benachbart zum Gewinde 130 im Umfangsrichtung ab und bildet einen exzentrischen Spannbereich 131 aus, so dass bei einer Verdrehung der Spannpuppe sich der exzentrische Spannbereich 131 gegen den Schneidkörper 103 abstützt und so eine Verspannung bewirkt werden kann. Entsprechend wird das Spannmittel 107 in axialer Richtung in die zweite Ausnehmung 106, wie die Bohrung, eingeschraubt. Zum Einsetzen und Verdrehen weist das Spannmittel 107 einen Werkzeugangriffsbereich 113 auf, der beispielsweise als Torx, TorxPlus, Imbus etc. ausgebildet sein kann. Im Bereich des Segmentabschnitts 132 weist die Spannpuppe als Spannmittel 107 eine etwa V-förmige Vertiefung 133 als Rinne auf.

Die erste Ausnehmung 105 in dem Grundkörper 102 weist gegenüberliegende erste Führungsbereiche 114 und zweite Führungsbereiche 115 auf, die mit dritten Führungsbereichen 116 und vierten Führungsbereichen 117 des Schneidkörpers 3 kooperieren. Auch das Spannmittel 107 weist einen fünften Führungsbereich 118 auf, welcher ebenso mit dem sechsten Führungsbereich 119 des Schneidkörpers 103 kooperiert.

Gemäß der Figuren 11 bis 14 sind die erste Ausnehmung 105 und die zweite Ausnehmung 106 derart benachbart zueinander angeordnet, dass das Spannmittel 107 benachbart zu der ersten Ausnehmung 105 angeordnet ist, so dass der fünfte Führungsbereich 118 des Spannmittels 107 benachbart zu dem ersten Führungsbereich 114 der ersten Ausnehmung 105 angeordnet ist und der dritte Führungsbereich 116 des Schneidkörpers 103 in den ersten Führungsbereich 114 eingreift, wobei der fünfte Führungsbereich 118 des Spannmittels 107 in den sechsten Führungsbereich 119 des Schneidkörpers 103 eingreift.

Der Schneidkörper 103 greift daher mit seinem dritten und vierten Führungsbereich 116, 117 in den ersten und den zweiten Führungsbereich 114, 115 ein, wobei zum Verspannen der fünfte Führungsbereich 118 den sechsten Führungsbereich 119 beaufschlagt.

Durch ein Verdrehen des Spannmittels 107 wird der Schneidkörper 103 in Umfangsrichtung gegen den Grundkörper 102 verspannt.

Die Figur 13 zeigt, dass die zweite Ausnehmung 106 in Längsrichtung der ersten Ausnehmung 105 betrachtet etwa mittig der Länge der ersten Ausnehmung 105 und benachbart zu der ersten Ausnehmung 105 angeordnet ist. Damit wird eine gleichmäßige Kraftverteilung auf den Schneidkörper 103 zum Spannen des Schneidkörpers 103 in der ersten Ausnehmung 105 ermöglicht.

Die Figur 14 zeigt, dass der erste Führungsbereich 114 und der zweite Führungsbereich 115 als abgewinkelte, etwa v-förmige Führungsnuten mit optionalem abgeflachtem mittigem Grund 150 ausgebildet sind. Dabei ist sowohl der erste Führungsbereich 114 als abgewinkelte, v-förmige Führungsnut ausgebildet, wobei der Nutgrund 150 abgeflacht ist und es ist der zweite Führungsbereich 115 ebenso als abgewinkelte, v-förmige zweite Führungsnut mit abgeflachtem Nutgrund 150 ausgebildet. Dabei ist der Winkel der Führungsnut 114 flacher als der Winkel der Führungsnut 115.

Die Figuren 14, 15 und 16 zeigen auch, dass der dritte Führungsbereich 116 und der vierte Führungsbereich 117 als abgewinkelte, v-förmige Führungsvorsprünge mit abgeflachtem Spitzenbereich ausgebildet sind. Dabei ist der dritte Führungsbereich 116 als abgewinkelter, v-förmiger dritter Führungsvorsprung mit abgeflachtem Spitzenbereich ausgebildet und der vierte Führungsbereich 117 als abgewinkelter, v-förmiger Führungsvorsprung mit abgeflachtem Spitzenbereich ausgebildet.

Dabei ist die jeweilige v-förmige Kontur des jeweiligen Führungsvorsprungs kompatibel zu der jeweiligen v-förmigen Kontur der jeweiligen Führungsnut, in welche er eingreift.

In den Figuren ist auch zu erkennen, dass der fünfte Führungsbereich 118 als bogenförmiger Führungsvorsprung ausgebildet ist. Dieser greift in die bogenförmige sechste Führungsnut 119 des Schneidkörpers 103 ein.

Der Schneidkörper 103 gemäß der Figuren 15 bis 17 weist an beiden Endbereichen 126 eine Hauptschneide 108 und optionale Nebenschneiden 109 auf. Der Schneidkörper 103 ist als Wechselschneidkörper ausgebildet. Dabei kann es auch vorteilhaft sein, wenn der Schneidkörper 103 nur in einem Endbereich 126 mit einer Hauptschneide 108 und optionalen Nebenschneiden 109 ausgebildet ist.

Wird das Spannmittel 107 in die zweite Ausnehmung 106 eingesetzt und verdreht, so dass der Segmentabschnitt 132 mit der ersten Ausnehmung 105 fluchtet, so kann der Schneidkörper 103 in die erste Ausnehmung 105 eingesteckt werden. Anschließend kann das Spannmittel 107 verdreht werden, was zum Verspannen des Schneidkörpers 103 in Umfangsrichtung gegen den Grundkörper 102 führt.

Der fünfte Führungsbereich 118 des Spannmittels 107 ist als bogenförmige Kontur des Spannmittels 107 ausgebildet, wobei der sechste Führungsbereich 119 als bogenförmige Vertiefung 110 des Schneidkörpers 103 ausgebildet ist. Entsprechend sind die Konturen kompatibel gewählt.

In den Figuren ist auch zu erkennen, dass der dritte und der vierte Führungsbereich 116, 117 eine Längsachse 140 aufweist, die parallel zur Längserstreckung des Schneidkörpers 103 ausgerichtet ist.

Entsprechend weist der erste und der zweite Führungsbereich 114, 115 eine Längsachse 141 auf, die parallel zur Längserstreckung der ersten Ausnehmung 105 ausgerichtet ist.

Auch weist der fünfte Führungsbereich 118 eine Längsachse 142 auf, die senkrecht zur Längserstreckung der ersten Ausnehmung 105 ausgerichtet ist. Der sechste Führungsbereich 119 weist eine Längsachse 143 auf, die senkrecht zur Längserstreckung des Schneidkörpers 103 ausgerichtet ist.

### Bezugszeichenliste

- 1: Schneidwerkzeug
- 2: Grundkörper
- 3: Schneidkörper
- 4: Scheibe
- 5: erste Ausnehmung
- 6: zweite Ausnehmung
- 7: Spannmittel
- 8: Hauptschneide
- 9: Nebenschneide
- 10: bogenförmige Vertiefung
- 13: Werkzeugangriffsbereich
- 14: erster Führungsbereich
- 15: zweiter Führungsbereich
- 16: dritter Führungsbereich
- 17: vierter Führungsbereich
- 18: fünfter Führungsbereich
- 19: sechster Führungsbereich
- 26: Endbereich
- 30: Segmentabschnitt
- 40: Längsachse
- 41: Längsachse
- 42: Längsachse
- 43: Längsachse
- 101: Schneidwerkzeug
- 102: Grundkörper
- 103: Schneidkörper
- 104: Scheibe
- 105: erste Ausnehmung
- 106: zweite Ausnehmung
- 107: Spannmittel
- 108: Hauptschneide
- 109: Nebenschneide
- 110: bogenförmige Vertiefung
- 113: Werkzeugangriffsbereich
- 114: erster Führungsbereich
- 115: zweiter Führungsbereich
- 116: dritter Führungsbereich
- 117: vierter Führungsbereich
- 118: fünfter Führungsbereich
- 119: sechster Führungsbereich
- 126: Endbereich
- 130: Gewinde
- 131: exzentrische Spannbereich
- 132: Segmentabschnitt
- 133: Vertiefung
- 140: Längsachse
- 141: Längsachse
- 142: Längsachse
- 143: Längsachse
- 150: mittiger Grund / Nutgrund

## Patentansprüche

1. Schneidwerkzeug (1, 101) mit einer Anordnung zumindest eines Schneidkörpers (3, 103), mit einem Grundkörper (2, 102) mit zumindest einer ersten Ausnehmung (5, 105) zur Aufnahme des Schneidkörpers (3, 103) und mit einer zweiten Ausnehmung (6, 106) zur Aufnahme eines Spannmittels (7, 107), mittels welchem der Schneidkörper (3, 103) gegen den Grundkörper (2, 102) beaufschlagbar und/oder formschlüssig in dem Grundkörper (2, 102) sicherbar ist, wobei die erste Ausnehmung (5, 105) gegenüberliegende erste Führungsbereiche (14, 114) und zweite Führungsbereiche (15, 115) aufweist, die mit dritten Führungsbereichen (16, 116) und vierten Führungsbereichen (17, 117) des Schneidkörpers (3, 103) kooperieren, wobei das Spannmittel (7, 107) einen fünften Führungsbereich (18, 118) aufweist, welcher mit einem sechsten Führungsbereich (19, 119) des Schneidkörpers (3, 103) zusammenwirkt, wobei die erste Ausnehmung (5, 105) und die zweite Ausnehmung (6, 106) derart benachbart zueinander angeordnet sind, dass das Spannmittel (7, 107) benachbart zu der ersten Ausnehmung (5, 105) angeordnet ist, so dass der fünfte Führungsbereich (18, 118) des Spannmittels (7, 107) benachbart zu dem ersten Führungsbereich (14, 114) der ersten Ausnehmung (5, 105) angeordnet ist und der dritte Führungsbereich (16, 116) des Schneidkörpers (3, 103) in den ersten Führungsbereich (14, 114) eingreift und der fünfte Führungsbereich (18, 118) des Spannmittels (7, 107) in den sechsten Führungsbereich (19, 119) eingreift.

2. Schneidwerkzeug (1, 101) nach Anspruch 1, **dadurch gekennzeichnet, dass** die zweite Ausnehmung (6, 106) eine Bohrung ist und das Spannmittel (7, 107) eine Spannpuppe mit sich vergrößerndem Radius als Funktion des Umfangswinkels ist, welches in die Bohrung einsetzbar und darin verdrehbar ist.

3. Schneidwerkzeug (1, 101) nach Anspruch 1 oder 2, **dadurch gekennzeichnet, dass** die zweite Ausnehmung (6, 106) in Längsrichtung der ersten Ausnehmung (5, 105) betrachtet etwa mittig der Länge der ersten Ausnehmung (5, 105) und benachbart zu der ersten Ausnehmung (5, 105) angeordnet ist.

4. Schneidwerkzeug (1, 101) nach Anspruch 1, 2 oder 3, **dadurch gekennzeichnet, dass** der erste Führungsbereich (14, 114) und der zweite Führungsbereich (15, 115) als bogenförmige Führungsnuten ausgebildet sind.

5. Schneidwerkzeug (1, 101) nach Anspruch 1, 2 oder 3, **dadurch gekennzeichnet, dass** der erste Führungsbereich (14, 114) und der zweite Führungsbereich (15, 115) als abgewinkelte, v-förmige Führungsnuten, insbesondere mit einem abgeflachten mittigen Grund (150), ausgebildet sind.

6. Schneidwerkzeug (1, 101) nach einem der vorhergehenden Ansprüche 1 bis 4, **dadurch gekennzeichnet, dass** der dritte Führungsbereich (16, 116) und der vierte Führungsbereich (17, 117) als bogenförmige Führungsvorsprünge ausgebildet sind.

7. Schneidwerkzeug (1, 101) nach einem der vorhergehenden Ansprüche 1 bis 3 und 5, **dadurch gekennzeichnet, dass** der dritte Führungsbereich (16, 116) und der vierte Führungsbereich (17, 117) als abgewinkelte, v-förmige Führungsvorsprünge, insbesondere mit einem abgeflachten Spitzenbereich, ausgebildet sind.

8. Schneidwerkzeug (1, 101) nach einem der vorhergehenden Ansprüche, **dadurch gekennzeichnet, dass** der fünfte Führungsbereich (18, 118) als bogenförmige Kontur des Spannmittels (7, 107) ausgebildet ist und der sechste Führungsbereich (19, 119) als bogenförmige Vertiefung (10, 110) des Schneidkörpers (3, 103) ausgebildet ist.

9. Schneidwerkzeug (1, 101) nach einem der vorhergehenden Ansprüche, **dadurch gekennzeichnet, dass** der dritte und der vierte Führungsbereich (16, 17, 116, 117) eine Längsachse (40, 140) aufweisen, die parallel zur Längserstreckung des Schneidkörpers (3, 103) ausgerichtet ist.

10. Schneidwerkzeug (1, 101) nach einem der vorhergehenden Ansprüche, **dadurch gekennzeichnet, dass** der erste und der zweite Führungsbereich (14, 15, 114, 115) eine Längsachse (41, 141) aufweisen, die parallel zur Längserstreckung der ersten Ausnehmung (5, 105) ausgerichtet ist.

11. Schneidwerkzeug (1, 101) nach einem der vorhergehenden Ansprüche, **dadurch gekennzeichnet, dass** der fünfte Führungsbereich (18, 118) eine Längsachse (42, 142) aufweist, die senkrecht zur Längserstreckung der ersten Ausnehmung (5, 105) ausgerichtet ist und dass der sechste Führungsbereich (19, 119) eine Längsachse (43, 143) aufweist, die senkrecht zur Längserstreckung des Schneidkörpers (3, 103) ausgerichtet ist.

12. Schneidwerkzeug (1, 101) nach einem der vorhergehenden Ansprüche, **dadurch gekennzeichnet, dass** der Grundkörper (2, 102) eine drehbar anordenbare Scheibe (4, 104) ist mit einer Mehrzahl von über den Umfang verteilten radial außen angeordneten Schneidkörpern (3, 103), die in jeweiligen Ausnehmungen (5, 6, 105, 106) angeordnet sind.

13. Schneidwerkzeug (1, 101) nach einem der vorhergehenden Ansprüche, **dadurch gekennzeichnet, dass** der Grundkörper (2, 102) ein feststellbarer Halter ist mit zumindest einem feststehend anordenbaren Schneidkörper (3, 103), welcher in einer Ausnehmung (5, 6, 105, 106) angeordnet ist.

14. Schneidwerkzeug (1, 101) nach einem der vorhergehenden Ansprüche, **dadurch gekennzeichnet, dass** der jeweilige Schneidkörper (3, 103) mittels des jeweiligen Spannmittels (7, 107) lateral bzw. in Umfangsrichtung gegen den Grundkörper (2, 102) verspannbar ist.
